# DEMANDE DE BREVET EUROPEEN

(11) **EP 1 591 238 A1**
(43) Date de publication de la demande: **02.11.2005**
(21) Numéro de dépôt: 05290831.6
(22) Date de dépôt: 14.04.2005
(51) Int. Cl.: B32B 31/04, B32B 27/08, B42D 15/10, G06K 19/02

(54) **Procédé pour la réalisation de cartes plastiques composites souples et cartes obtenues à l'aide dudit procédé**

(30) Priorité: 27.04.2004 FR 0404488
(71) Demandeur: Mignon, Daniel, 78100 Saint Germain en Laye (FR)
(72) Inventeur: Mignon, Daniel, 78100 Saint Germain en Laye (FR)
(74) Mandataire: de Saint-Palais, Arnaud Marie

(57) **Abrégé**

Le procédé selon l'invention consiste à effectuer un colaminage d'un substrat (10) de polyester (PET) et d'au moins une couverture de chlorure de polyvinyle PVC (8,9) avec formation préalable d'au moins deux couchages intermédiaires, l'un (11,12) sur le substrat (10) en polyester, l'autre (13,14) sur la couverture (8,9) en PVC, ces deux couchages jouant le rôle d'interface dans la soudure thermique de la couverture en PVC sur le substrat en polyester. Ce procédé permet d'obtenir des cartes souples présentant une solidité et une résistance au pelage très élevées.

## Description

La présente invention a pour objet un procédé pour la réalisation de cartes souples en matières plastiques composites ainsi que les cartes obtenues à l'aide dudit procédé.

D'une façon générale, on sait que l'utilisation de cartes a de plus en plus tendance à se généraliser pour de nombreuses applications, telles que, par exemple, des cartes de crédit, des cartes d'identification, des cartes d'abonnement, des cartes de prépaiement, etc...

Dans la plupart des cas, les cartes de ce type servent de support à des informations directement lisibles ou à des informations nécessitant des moyens de lecture, telles que des codes à barres, des messages enregistrés sur des pistes magnétiques, des perforations, ou même des informations stockées dans des mémoires (cartes à puce ou transpondeurs).

Dans ce dernier cas, la lecture de ces cartes s'effectue dans des dispositifs de lecture à l'intérieur desquels les cartes doivent être introduites.

Bien entendu, il est souhaitable que la durée de vie de ces cartes soit la plus longue possible, non seulement en raison du coût de ces cartes, mais surtout du coût des services qui sont nécessaires pour effectuer un changement de carte (remplacement, renouvellement).

Or, il s'avère que certaines de ces cartes font l'objet d'un usage intensif. Tel est le cas, par exemple, des cartes d'abonnement utilisées dans les transports en commun.

Pour ce type de cartes, le cahier des charges impose un nombre de caractéristiques techniques draconiennes qui, jusqu'ici, n'ont jamais été satisfaites en totalité. Pour ce type d'application, ces caractéristiques techniques portent notamment sur :
- le strict respect des dimensions extérieures de la carte (par exemple la norme ISO prévoit une largeur de 53,98 ± 0,1 mm, une longueur de 85,6 mm ± 0,2 mm et une épaisseur de 270 µm ± 20),
- le strict respect de la position de la piste magnétique par rapport au bord inférieur de la carte 4,25 ± 0,25 mm,
- la compatibilité de la face recto de la carte avec un procédé de personnalisation par sublimation (impression d'une photo) et d'un nom par transfert thermique,
- la résistance mécanique aux passages successifs dans un lecteur de cartes (minimum 2000 passages).

A l'heure actuelle, deux solutions coexistent sur le marché, à savoir : les cartes en PVC (chlorure de polyvinyle) laminé et la carte en PET "mono core" (polyester blanc opaque - polytéréphtalate d'éthylène).
a) La carte en PVC laminé comprend un coeur de carte en PVC d'épaisseur de 125 µm à 150 µm et deux couches de couverture ("overlays") transparentes en PVC d'épaisseur 80 µm. Cette solution permet d'obtenir une qualité de surface du recto répondant parfaitement au besoin de personnalisation par sublimation. Par contre, elle souffre des inconvénients suivants :
   - Elle présente une résistance mécanique médiocre (carte coupée dans le sens longitudinal après 5 à 600 passages dans un lecteur.
   - La norme d'épaisseur de la carte est très difficile à respecter compte tenu de la tolérance de 15 à 20 % imposée par les fabricants de feuille de PVC.
   - Les normes de position de la piste magnétique sont très difficiles à respecter par les fabricants : La couche de recouvrement portant la piste magnétique est posée manuellement de sorte qu'aucune garantie industrielle ne peut être apportée sur le bon repérage par rapport à l'impression du coeur.
   - En outre, cette carte PVC laminée présente rapidement des amorces de fracture inhérentes à la structure physicochimique du PVC calandré en faible épaisseur (tensions internes résiduelles importantes, création de tensions internes évolutives au niveau de la piste magnétique). Par ailleurs, la résistance thermique mesurée selon les normes ISD ne dépasse pas 60°C, ce qui est insuffisant compte tenu des conditions d'exploitation. Enfin, le PVC est sujet au marquage irréversible des pliures, ce qui est rédhibitoire pour un bon fonctionnement de la piste magnétique.
b) La carte en polyester PET mono core est réalisée à partir d'un seul composant, à savoir une feuille en polyester d'environ 250 µm imprimée recto/verso avec impression d'une piste magnétique protégée par vernis, cette impression étant réalisée par un procédé héliographique.

Cette solution permet de respecter les normes d'épaisseur ainsi que les exigences de position de la piste et de résistance mécanique.

Néanmoins, la technique d'impression de la piste n'offre pas la qualité intrinsèque d'une piste extrudée laminée. Par ailleurs, la résolution selon ISO 7811 est insuffisante, le bruit de fond reste trop élevé et la surépaisseur résultante est nuisible au bon fonctionnement des lecteurs utilisés pour la lecture de la carte. De plus, l'état de surface de la piste entraîne une usure accélérée des têtes de lecture magnétiques de ces lecteurs, induisant une maintenance accrue.

Un autre inconvénient de cette solution consiste en ce que le polyester ne permet pas d'obtenir un état de surface compatible avec une personnalisation de la carte par sublimation. Une telle personnalisation exige l'emploi d'un vernis thermoplastique rendant possible le transfert thermique et la sublimation. Toutefois, dans ce cas, les risques de rétention de solvant et la nécessité d'une surface très lisse impose des conditions d'impression du vernis peu compatible avec une production industrielle. En outre, la qualité et la résistance à l'abrasion de la personnalisation sur vernis restent moindres que celles obtenues sur du PVC laminé.

Il s'avère que dans les deux solutions précédemment évoquées, l'épaisseur de la matière et surtout la souplesse de la matière rendent particulièrement aléatoire la découpe des cartes par des procédés traditionnels dans le respect des dimensions prescrites.

L'invention a donc plus particulièrement pour but de résoudre les problèmes précédemment évoqués en cumulant les avantages des deux solutions décrites ci-dessus sans en présenter les inconvénients de manière à obtenir les caractéristiques suivantes :
- Surface PVC laminé optimum pour la personnalisation
- Piste magnétique "flush" conforme aux normes ISO
- Résistance thermique accrue jusqu'au moins 120°C, largement suffisante pour le type d'exploitation envisagé, y compris pour les applications liées à l'automobile
- Résistance mécanique très proche de celle du polyester
- Résistance au marquage par pliure

A cet effet, elle propose un procédé de fabrication consistant à effectuer un colaminage d'un substrat de polyester et d'au moins une couverture de PVC avec formation préalable d'au moins deux couchages intermédiaires, l'un sur le polyester, l'autre sur le PVC, ces deux couchages jouant le rôle d'interface dans la soudure thermique de la couverture en PVC sur le substrat en polyester.

Le couchage effectué sur le substrat en polyester a pour caractéristique une très forte adhérence sur le polyester en même temps qu'une bonne imprimabilité. Il devient donc possible d'effectuer des impressions sur ce couchage par exemple par un procédé sérigraphique ou offset ou numérique (par exemple de type "indigo") avec des encres UV et ce, préalablement à l'étape de colaminage.

L'enduction d'un couchage intermédiaire sur la face intérieure de la couverture en PVC est de nature thermocollante réactivée par la chaleur.

L'étape de laminage s'effectue en portant le complexe PVC/PET à une température inférieure à la température de fusion du PET de l'ordre de 150°C à une pression de l'ordre de 40 bars pendant une période de l'ordre de 8 à 10 minutes. (Ces valeurs peuvent varier en fonction des configurations retenues pour l'équipement de production).

A la température de laminage, le substrat en PET reste stable, tandis que l'enduction thermocollante dont est recouverte la face interne de la couverture en PVC qui est alors à l'état pâteux entre en fusion et adhère sur l'impression et le couchage recouvrant le substrat en PET.

Le refroidissement, toujours opéré sous pression, fige ensuite le complexe en assurant une adhérence permanente de la couverture en PVC sur le substrat en PET.

La solidité de la carte ainsi obtenue, en particulier la résistance au pelage, est très élevée, en tous cas supérieure aux spécifications des normes ISO pour les cartes.

Ces résultats sont obtenus grâce à la forte adhérence du couchage réalisé sur l'âme en PET et à la parfaite compatibilité des enductions thermocollantes du PVC avec ledit couchage.

Bien entendu, le procédé selon l'invention pourra comprendre le colaminage d'un substrat de PET et de deux couvertures respectivement disposées sur les deux faces opposées de ce substrat. Dans ce cas, il conviendra de prévoir la formation de deux couchages intermédiaires respectivement sur les deux faces du substrat et de deux couchages intermédiaires respectivement sur les faces intérieures des deux couvertures. Dans ce cas, des impressions pourront être effectuées sur les couchages réalisés sur les deux faces du substrat.

La solution mise en oeuvre par le procédé selon l'invention s'avère contraire aux préjugés de l'homme du métier qui estimait jusqu'ici que le colaminage d'un complexe PVC-PET était impossible pour ce type d'application. En fait, jusqu'à présent, on ne trouvait pas sur le marché de polyester couché dont l'adhérence de couchage sur le substrat était suffisante pour éviter le pelage des couvertures. Dans tous les cas de figure, les tests de résistance au pelage et de fatigue mécanique provoquent un détachement systématique du couchage sur le PET, rendant la carte inutilisable.

Des modes de mise en oeuvre du procédé selon l'invention seront décrits ci-après, à titre d'exemples non limitatifs, avec référence aux dessins annexés dans lesquels :
Les figures 1 et 2 sont des vues respectivement recto/verso d'une carte selon l'invention ;
La figure 3 est une vue en coupe transversale à plus grande échelle de la carte selon A/A' de la figure 1 ;
La figure 4 est une représentation schématique d'une installation pour la réalisation d'une carte du type de celle représentée figures 1 et 2.

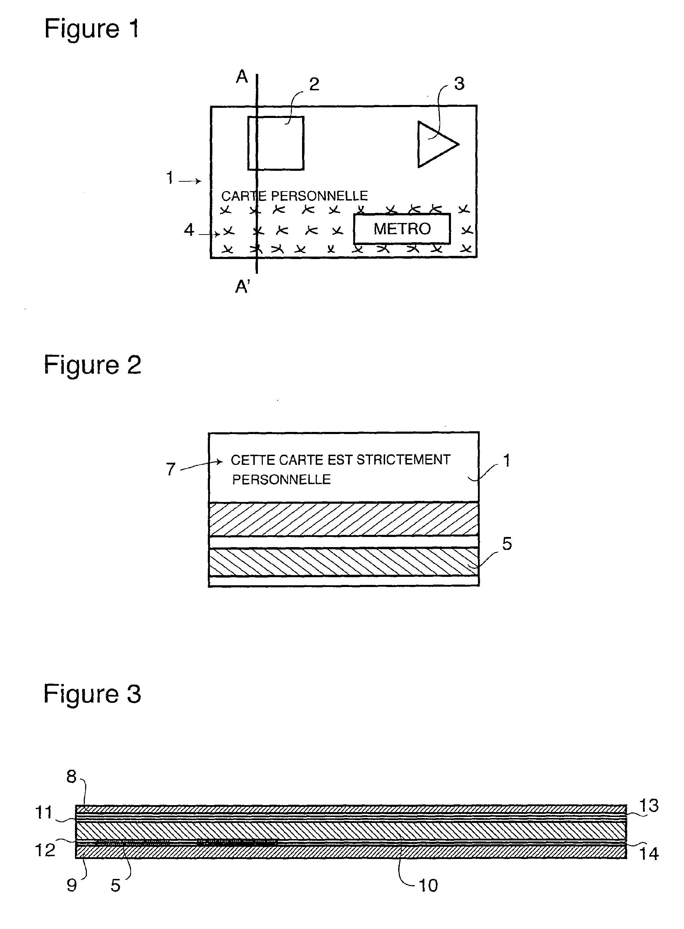

Dans l'exemple illustré sur les figures 1 à 3, la carte 1 réalisée conformément au procédé selon l'invention est une carte individuelle de transport en commun, par exemple de métro, qui porte au recto une photographie 2 du propriétaire de la carte, une flèche 3 pour indiquer le sens d'introduction de la carte dans un lecteur, des inscriptions 4 et un graphisme pouvant comprendre par exemple le logo de la société de transport en commun.

Au verso de la carte 1 apparaissent une piste magnétique longitudinale 5 ainsi que des inscriptions 7 mettant l'accent sur le fait que la carte est strictement personnelle.

Ces inscriptions et ces éléments de personnalisation sont visibles au travers d'une couverture en matière plastique 8, 9 transparente ("overlays") recouvrant les deux faces principales de la carte 1.

D'une façon plus précise, comme illustré sur la figure 3, la carte 1 se compose d'un substrat 10 constitué d'une feuille de polyester (PET) (polytéréphtalate d'éthylène) d'une épaisseur d'environ 125 µm et des deux couches de couverture ("overlays") 8 et 9 qui, conformément à l'invention, sont réalisées en chlorure de polyvinyle (PVC) transparent d'épaisseur d'environ 80 µm.

L'usage d'un substrat en PET (recyclable) présente notamment l'avantage de permettre des impressions à des températures, par exemple de 140°C à 160°C incompatibles avec les techniques d'impression sur PVC dont le point Vicat est très bas (60°C à 90°C). Par ailleurs, la combinaison des caractéristiques mécaniques du PET avec le PVC dans une structure composite PVC, PET, PVC permet d'obtenir des résultats inattendus notamment en ce qui concerne la flexibilité de la carte et l'absence de traces rémanentes à la suite de flexions prononcées.

Néanmoins, l'obtention de ces résultats implique la résolution du problème relatif à l'impression sur le substrat 10 à la fixation des couches de couverture 8 et 9 sur le substrat. Or, comme précédemment mentionné, les tentatives effectuées jusqu'ici pour effectuer une telle fixation s'étaient avérées infructueuses.

Le procédé selon l'invention permet donc de résoudre ce problème et de surmonter ce préjugé, en réalisant des couchages intermédiaires, d'une part, sur les deux faces du substrat 10 en PET (couchages 11, 12) et, d'autre part, sur les faces internes des couvertures 8, 9 en PVC (couchages 13, 14), ces couchages jouant le rôle d'interface dans la soudure thermique, sous pression des différentes couches.

Par ailleurs, les couchages 11, 12 effectués sur le substrat en PET 10, outre leur très forte adhérence sur ce substrat 10, présentent l'avantage de permettre l'obtention d'une bonne imprimabilité du PET.

Les couchages 13, 14 réalisés sur les faces internes des couvertures en PVC 8, 9 sont, quant à eux, de nature thermocollante. Cette propriété peut être réactivée par la chaleur.

Lors du laminage, on porte le complexe comportant le substrat en PET 10 et les couches de couverture 8, 9 à une température de l'ordre de 150°C sous une pression par exemple de 40 bars pendant une durée par exemple de 8 à 10 minutes.

Au cours de ce laminage, le PET reste stable dans cette zone de température pendant que l'enduction thermocollante (couchages 13, 14) dont est recouverte la face interne des couvertures 8, 9 en PVC entre en fusion sur l'impression et les couchages du PET 11, 12.

Le refroidissement, toujours opéré sous pression, fige le complexe, assurant une adhérence permanente des couvertures PVC 8, 9 sur le substrat PET 10.

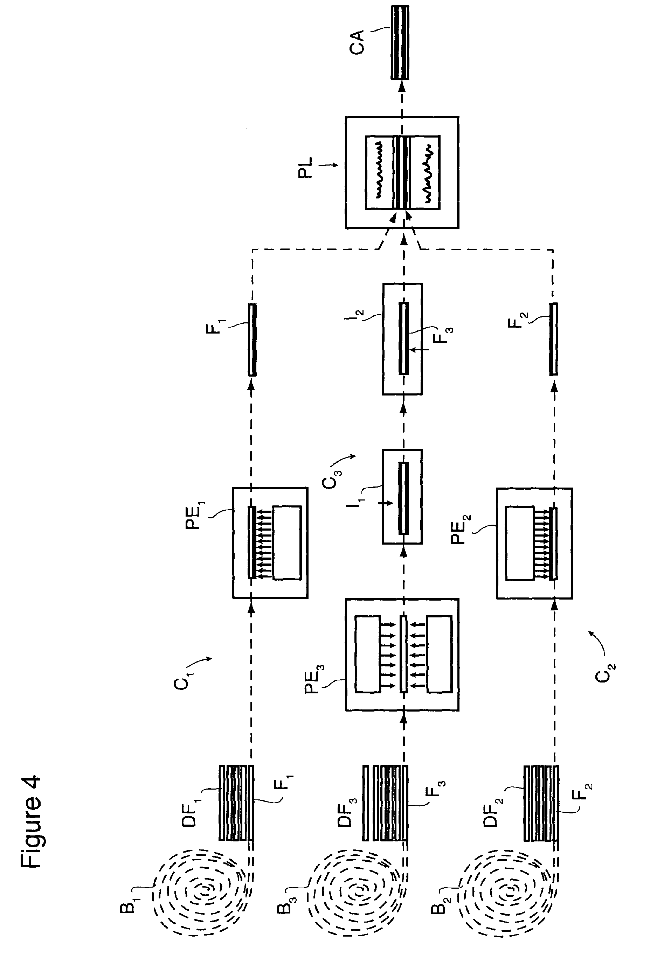

L'installation pour la mise en oeuvre de ce procédé peut comprendre, comme illustré sur la figure 4, trois chaînes de traitement, à savoir : deux chaînes C₁, C₂ de traitement de couvertures en PVC 8, 9 et une chaîne C₃ de traitement d'un substrat 10 en PET, ces trois chaînes C₁ à C₃ aboutissant à un poste de laminage PL.

Les chaînes de traitement C₁, C₂ comportent chacune un poste d'enduction d'un couchage PE₁, PE₂ alimenté par un distributeur de feuilles de couverture DF₁, DF₂ ou, en alternative, par une bande de couverture provenant d'une bobine B₁, B₂ (en traits interrompus).

La chaîne de traitement du substrat C₃ comporte tout d'abord un poste d'enduction PE₃ dans lequel on effectue un couchage des deux faces principales du substrat. Ce poste d'enduction PE₃ est alimenté par un distributeur de feuilles en PET DF₃ (ou d'une bande en PET provenant d'une bobine B₃).

Une fois traitées, les feuilles en PET F₁ (ou la bande) sont transmises à deux postes d'impression respectivement recto/verso I₁, I₂ avant d'être amenées au poste de laminage PL.

Dans ce poste de laminage PL, les deux faces principales des feuilles F₃ (ou bande) en PET sont recouvertes par les feuilles F₁, F₂ (ou bandes) en PVC provenant des postes d'enduction PE₁, PE₂.

Le laminage du complexe substrat PET/couverture PVC s'effectue de la façon précédemment mentionnée.

Au sortir du poste de laminage PL, les cartes prêtes à l'emploi CA peuvent être stockées. Dans le cas où l'on utilise des bandes, il sera nécessaire de prévoir un poste de découpe des cartes à partir de la bande de structure sandwich sortant du poste de laminage.

Le procédé précédemment décrit permet de réaliser notamment des cartes dont les caractéristiques sont adaptées au contrôle d'accès et au paiement dans les transports urbains avec des titres de longue durée, en particulier :
- épaisseur limitée à 270 µm ± 20
- présence d'une piste magnétique
- aptitude à la personnalisation par sublimation et transfert thermique
- grande résistance thermique et mécanique

Elle est conforme pour les spécifications pertinentes aux normes :
ISO 7810
ISO 7811-2 et 7811-6
ISO 7816
ISO10373
ANSI NCITS 322

Par ailleurs, pour les spécifications suivantes, les performances de cette carte sont nettement supérieures aux valeurs requises :
- résistance en température : 120°C au lieu de 50°C
- résistance en flexion et torsion : 5000 cycles au lieu de 1000
- cycles d'usure sous tête magnétique : supérieure à 2000 cycles
- résistance au pelage : très supérieure à 35 N/cm
- résistance chimique

Par ailleurs, ce procédé permet de résoudre les problèmes de position de piste et de découpe par l'usage de cellules lisant des repères visuels imprimés, assurant une grande précision de positionnement des éléments les uns par rapport aux autres et du format assemblé sous l'outil de découpe.

Ainsi, notamment, l'impression recto/verso du substrat pourra être réalisée en sérigraphie ou offset ou numérique par exemple de type"indigo" avec des encres UV.

L'assemblage des couvertures sur le substrat peut s'effectuer selon la séquence suivante :

Au cours d'une première étape, les feuilles de substrat sont automatiquement positionnées sur une table par la reconnaissance de repères imprimés lus par des cellules. On effectue alors le perçage de deux trous par exemple sur les côtés supérieurs gauche et droit de la feuille. Les couvertures pistées sont positionnées en se référant à la position des pistes.

Deux trous sont également percés sur les couvertures sur les côtés supérieurs gauche et droit en référence aux trous percés dans la feuille de substrat.

Les couvertures pistées et le substrat sont posés sur des tétons passant par des trous de sorte que l'on obtient ainsi une parfaite correspondance.

Les trois éléments sont alors soudés par points au bas des formats.

Le laminage peut s'effectuer de la façon précédemment mentionnée. Au cours de ce laminage, sous l'effet de la température et de la pression, on obtient une fusion parfaite du PVC avec les couchages et les couches d'impression, notamment avec les encres UV de sérigraphie, d'offset ou d'impression numérique de type "indigo".

On procède ensuite à la découpe des cartes : Grâce à des repères préimprimés sur les formats et repérées par des cellules optiques, les feuilles sont guidées en X, en Y et en thêta sous l'outil de découpe. Celui-ci peut être ajusté de façon spécifique de manière à obtenir une découpe très précise, malgré la souplesse et la finesse de l'ébauche.

## Revendications

1. Procédé pour la réalisation de cartes souples (1) en matière plastique,
**caractérisé en ce qu'**il consiste à effectuer un colaminage d'un substrat (10) de polyester (PET) et d'au moins une couverture de chlorure de polyvinyle PVC (8, 9) avec formation préalable d'au moins deux couchages intermédiaires, l'un sur le substrat (10) en polyester, l'autre sur la couverture (8, 9) en PVC, ces deux couchages jouant le rôle d'interface dans la soudure thermique de la couverture en PVC sur le substrat en polyester, une impression étant formée sur le couchage réalisé sur le substrat (10) préalablement à l'étape de colaminage.

2. Procédé selon la revendication 1,
**caractérisé en ce que** le couchage réalisé sur la face intérieure de la couverture en PVC (8, 9) a des propriétés thermocollantes réactivées par la chaleur.

3. Procédé selon l'une des revendications précédentes,
**caractérisé en ce que** l'étape de colaminage s'effectue à une température de l'ordre de 150°C à une pression de l'ordre de 40 bars pendant une période de l'ordre de 8 à 10 mm.

4. Procédé selon l'une des revendications précédentes,
**caractérisé en ce que** l'étape de colaminage comprend une phase de refroidissement sous pression.

5. Procédé selon l'une des revendications précédentes,
**caractérisé en ce qu'**il comprend le colaminage d'un substrat de polyester PET (10) et de deux couvertures (8, 9) respectivement disposées sur les deux faces opposées dudit substrat (10) et, en conséquence, la formation de deux couchages intermédiaires respectivement sur les deux faces dudit substrat (10) et de deux couchages intermédiaires sur les faces intérieures des deux couvertures (8, 9).

6. Procédé selon la revendication 5,
**caractérisé en ce qu'**il comprend des impressions sur les couchages intermédiaires réalisés sur les deux faces principales du substrat (10).

7. Procédé selon l'une des revendications précédentes,
**caractérisé en ce que** le substrat (10) présente une épaisseur d'environ 125 µm et des couches de couverture d'environ 80 µm.

8. Procédé selon l'une des revendications précédentes,
**caractérisé en ce que** la susdite impression s'effectue selon un processus d'impression numérique à une température de l'ordre de 140 à 160°C.

9. Carte réalisée conformément au procédé selon l'une des revendications précédentes,
**caractérisée en ce qu'**elle comprend un substrat en polyester (10) et au moins une couche de couverture en PVC (8, 9) fixée au substrat (10) par l'intermédiaire d'un interface formé par deux couchages respectivement disposé sur ledit substrat (10) et sur ladite couverture (8, 9), avec une impression réalisée sur le couchage porté par le substrat (10).

10. Carte selon la revendication 9,
**caractérisée en ce que** l'une des susdites couvertures (8, 9) porte au moins une piste magnétique (5).
